# FASCICULE DE BREVET EUROPEEN

(11) **EP 0 520 852 B1**
(45) Date de publication et mention de la délivrance du brevet: **29.03.1995**
(21) Numéro de dépôt: 92401568.8
(22) Date de dépôt: 05.06.1992
(51) Int. Cl.: F17D 3/08

(54) **Vanne raclable à trois voies, du type à papillon**
Molchfähiges 3-Wege-Klappenventil
3-Way butterfly valve for a pig pipeline

(30) Priorité: 27.06.1991 FR 9107952
(43) Date de publication de la demande: 30.12.1992
(73) Titulaire: FMC EUROPE S.A., F-89103 Sens Cédex (FR)
(72) Inventeur: Le Devehat, Eugène, F-89100 Saligny (FR)
(74) Mandataire: Rinuy, Santarelli

(56) Documents cités:
- CH-A- 483 974
- DE-A- 3 517 751

## Description

L'invention concerne une vanne raclable à trois voies adaptée à être montée sur une conduite de transfert de fluide, par exemple au sein d'installations de distribution d'huiles ou de produits pétroliers.

Ainsi qu'on le sait, une conduite est raclable lorsque l'on peut y faire circuler un racleur ("pig" en anglais) c'est-à-dire un tampon mobile adapté à obturer la totalité de la section interne de cette conduite et à circuler dans celle-ci sous la pression d'un gaz de propulsion tel que air ou azote en pratique ; il en résulte un refoulement par le racleur des produits subsistant dans la conduite, sans mélange de ceux-ci avec le gaz de propulsion. La vidange de la conduite ainsi obtenue s'accompagne d'un nettoyage des parois internes de la conduite.

Cette possibilité de raclage pour une conduite a deux applications principales. D'une part elle permet l'utilisation de cette conduite (ou ligne) pour le transfert successif de plusieurs produits fluides, sans mélange entre eux. Elle permet en outre d'assurer un transfert optimal et complet d'une quantité donnée d'un produit donné, sans pertes dans cette conduite. On appréciera que ces résultats ne peuvent pas être obtenus de manière satisfaisante par des purges par air ou par gravité.

Bien entendu, une installation de transfert de fluides comporte une pluralité de telles conduites raclables.

Plusieurs types de racleurs sont connus, dont par exemple celui décrit dans le document EP-0.376.796 de FMC. De préférence, ces racleurs sont bidirectionnels, c'est-à-dire qu'ils sont adaptés à circuler dans les deux sens. Cela est particulièrement intéressant dans le cas de conduites du type "fermé", c'est-à-dire obturées en leurs extrémités, auquel cas les racleurs sont captifs.

De telles conduites du type "fermé" communiquent par des vannes à trois voies avec une ou plusieurs conduite(s) d'arrivée de fluide et une ou plusieurs conduite(s) d'évacuation de fluide, et un raclage efficace de ces lignes suppose que ces vannes à trois voies puissent elles-mêmes être traversées par un racleur ; en d'autres termes ces vannes à trois voies doivent être raclables sur deux desdites trois voies.

En fait, ces vannes raclables à trois voies ont une forme en T. Deux des voies, celles destinées à être traversées par un racleur, sont alignées et constituent conjointement la barre transversale de ce T tandis que la troisième voie constitue la barre verticale de ce T. Un élément d'obturation est prévu dans cette barre verticale pour, au choix, faire communiquer ou cette troisième voie avec les deux voies raclables, ou au contraire l'en isoler.

Une telle vanne raclable à trois voies a ainsi deux fonctions essentielles. En configuration fermée, l'élément d'obturation doit isoler de manière étanche les deux voies raclables vis à vis de la troisième voie, tandis que, en configuration ouverte, il doit introduire une perte de charge aussi faible que possible.

Plusieurs types de vannes raclables à trois voies sont actuellement connus.

On peut notamment citer la vanne proposée par le document DE-3.517.751 ou par le document WO 88/03246 dont l'élément d'obturation est constitué par une douille coulissante de plus grand diamètre interne que la barre transversale du T.

On peut citer en outre la vanne également proposée par le document WO 88/03246 ou le document DE-3.210.561, dont l'élément d'obturation est un anneau de même diamètre interne que la barre transversale du T mais mobile transversalement à celui-ci.

Ces deux types de vannes présentant l'inconvénient de générer une perte de charge notable en configuration ouverte, surtout dans le deuxième type de vannes. En outre, le premier type de vannes au moins a l'inconvénient de laisser subsister des volumes non accessibles aux racleurs, constituant donc des sources de contamination, tandis que le deuxième type de vannes présente rapidement à l'usage des défauts d'étanchéité en raison d'une dégradation inéluctable des joints d'étanchéité.

On connaît également la vanne à boisseau sphérique creux proposée par le document EP-0.375.553 de FMC mais celle-ci, si elle permet une excellente étanchéité et n'introduit qu'une perte de charge modérée, laisse néanmoins subsister un volume, il est vrai modéré, non accessible aux racleurs.

Il est à préciser en effet que les utilisateurs sont de plus en plus exigeants quant à la qualité du raclage et rajoutent cette exigence à celles précitées de bonne étanchéité et de faible perte de charge.

On peut également citer le document SU-945.551 à boisseau cylindrique légèrement tronconique dont il faut toutefois préciser qu'elle est destinée au transfert de produits abrasifs du type mortiers ; en outre, elle ne permet pas (ni ne vise) une étanchéité de qualité en configuration fermée compte tenu de l'impossibilité pratique de disposer un joint d'étanchéité auprès d'un boisseau cylindrique. Le dessin de ce boisseau permet toutefois, il est vrai, de supprimer tout volume non raclable en configuration fermée.

L'invention a pour objet de pallier les inconvénients précités en proposant une vanne raclable à trois voies qui, en configuration fermée, offre une bonne étanchéité combinée à l'absence de tout espace non raclable dans la barre transversale du T et qui, en configuration ouverte, ne génère qu'une perte de charge modérée. Elle a en outre pour objet de permettre, en configuration fermée, une purge efficace de l'ensemble de la barre verticale constituant la troisième voie.

L'invention propose à cet effet une vanne raclable à trois voies en forme de T comportant un tronçon tubulaire principal raclable, un tronçon tubulaire secondaire raccordé à angle droit à ce tronçon principal raclable en regard d'une ouverture ménagée radialement dans une portion médiane de ce tronçon tubulaire principal, et un élément mobile d'obturation monté rotatif autour d'un arbre de manoeuvre transversal à ce tronçon tubulaire secondaire et monté près de l'ouverture du côté du tronçon tubulaire secondaire et admettant un débattement angulaire entre une configuration de fermeture dans laquelle cet élément mobile d'obturation isole de façon étanche ce tronçon tubulaire secondaire vis à vis du tronçon tubulaire principal et une configuration d'ouverture dans laquelle ces tronçons tubulaires sont mis en communication, caractérisée en ce que ladite ouverture est déterminée par l'intersection de la surface interne cylindrique du tronçon tubulaire principal avec une surface formant siège formée d'une portion de sphère centrée sur l'intersection de l'axe de l'arbre de manoeuvre avec l'axe du tronçon tubulaire secondaire à une distance de l'axe du tronçon tubulaire principal inférieure à la somme du rayon interne de ce tronçon tubulaire et du rayon de cette portion de sphère, et en ce que cet élément mobile d'obturation est un papillon plein déporté par rapport à l'axe de l'arbre de manoeuvre, ayant une tranche formée d'une portion de sphère concentrique à la surface formant siège et de diamètre égal, à un jeu près, à cette surface formant siège, et une face extérieure tournée vers l'intérieur du tronçon tubulaire principal qui est une portion concave de cylindre de même diamètre que la surface interne cylindrique du tronçon tubulaire principal et d'axe situé vis à vis de l'axe de l'arbre de manoeuvre à la même distance et selon la même inclinaison que l'axe du tronçon tubulaire principal, grâce à quoi, en configuration de fermeture, ce papillon obture complètement l'ouverture en complétant localement la surface interne cylindrique du tronçon tubulaire principal.

On appréciera que l'invention a su reconnaître l'intérêt d'un papillon jusque là utilisé dans des vannes à deux voies, en l'adaptant pour satisfaire les objectifs précités.

Selon des dispositions préférées éventuellement combinées :
- un orifice de purge adapté à être connecté à une source de fluide de nettoyage, débouche à l'écart de l'ouverture du côté du tronçon tubulaire secondaire,
- cet orifice de purge débouche au ras de la face intérieure du papillon,
- ce papillon a une face intérieure qui est plane,
- la surface formant siège et la tranche du papillon ont un diamètre supérieur au diamètre interne du tronçon tubulaire principal,
- ce diamètre vaut entre 110 % et 150 % (de préférence 125 % à 135 %) du diamètre interne du tronçon tubulaire principal,
- l'arbre de manoeuvre est formé de deux tronçons coaxiaux et distants l'un de l'autre, tourillonnant dans des alésages diamétralement opposés et rendus solidaires l'un de l'autre par des oreilles ménagées sur la face intérieure de ce papillon,
- l'axe de l'arbre de manoeuvre est perpendiculaire aux axes des tronçons tubulaires principal et secondaire,
- le tronçon tubulaire principal comporte une bride de fixation entourant l'ouverture, sur laquelle est fixée une pièce de liaison au tronçon tubulaire secondaire, une même bague d'étanchéité assurant l'étanchéité entre le papillon et la surface formant siège et entre cette bride de fixation et la pièce de liaison,
- une collerette présentant un alésage cylindrique est interposée entre le tronçon tubulaire secondaire et une bride du tronçon principal entourant l'ouverture, l'arbre de manoeuvre étant monté tourillonnant dans cette collerette,
- un orifice de purge pour la purge du tronçon tubulaire secondaire débouche radialement dans cette collerette,
- le papillon, en configuration d'ouverture, déborde à l'intérieur du tronçon tubulaire principal sur environ un quart à un tiers du diamètre interne de ce dernier.

Des objets, caractéristiques et avantages de l'invention ressortent de la description qui suit, donnée à titre d'exemple non limitatif, en regard des dessins annexés sur lesquels :
- la figure 1 est une vue en coupe tranversale, selon la ligne I-I de la figure 2, d'une vanne conforme à l'invention, en configuration fermée,
- la figure 2 en est une vue en coupe longitudinale, selon la ligne II-II de la figure 1,
- la figure 3 est une vue en coupe longitudinale, selon la ligne III-III de la figure 4, de cette vanne en configuration ouverte,
- la figure 4 en est une vue en coupe, transversale à la troisième voie, selon la ligne IV-IV de la figure 3, et
- la figure 5 est un schéma de principe d'une conduite de transfert de fluide équipée de trois vannes conformes à celles des figures 1 à 4.

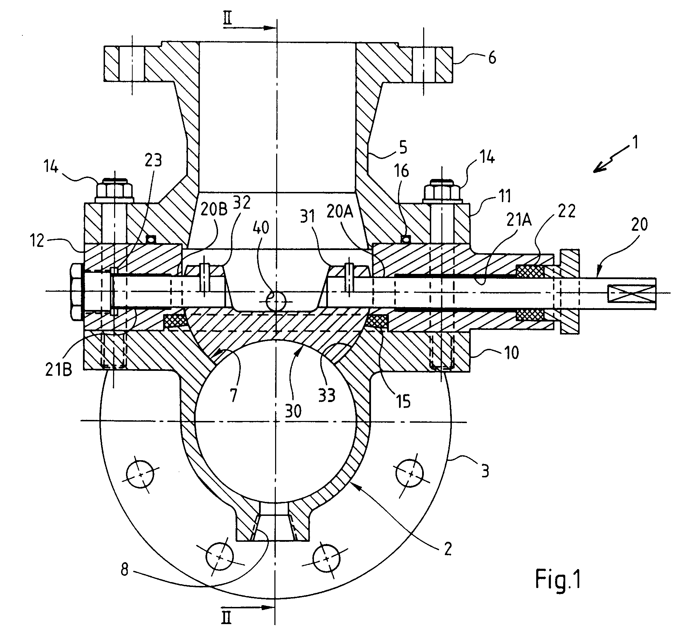

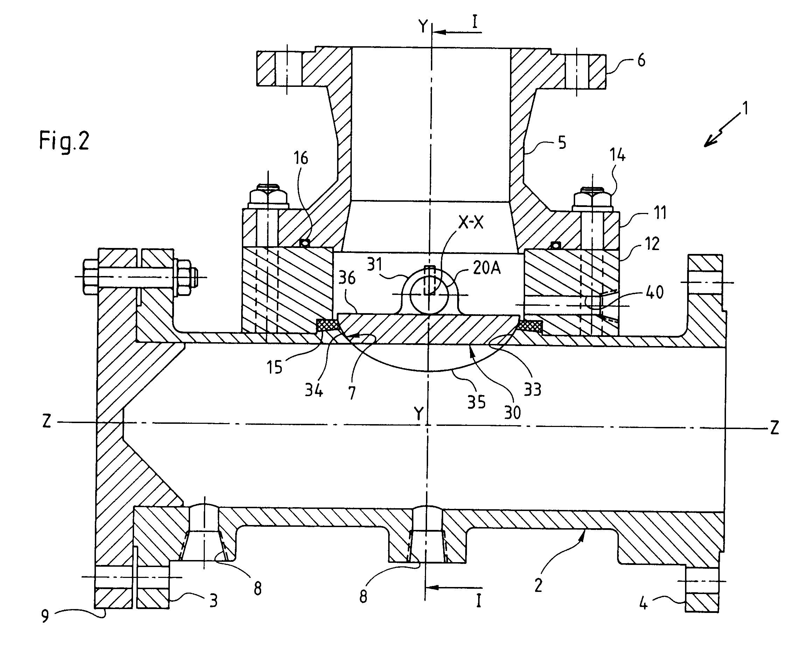

Les figures 1 à 4 représentent une vanne raclable à trois voies, désignée dans son ensemble par la référence 1, et ayant la forme d'un T.

Cette vanne 1 comporte un tronçon tubulaire principal 2, constituant deux voies raclables, muni en ses extrémités de deux brides transversales de fixation 3 et 4, ainsi qu'un tronçon tubulaire de dérivation 5, muni en une extrémité d'une bride de fixation 6, et se raccordant en son autre extrémité à ce tronçon tubulaire principal en regard d'une ouverture 7 ménagée dans la paroi de ce tronçon tubulaire principal en une portion médiane de celui-ci.

Dans l'épaisseur de ce tronçon principal est en outre prévu un (ou plusieurs) orifice(s) 8 adapté(s) à être connecté(s) à une source d'air comprimé (ou tout autre fluide sous pression approprié) non représentée.

A l'une des brides (ici 3) est, par exemple, fixée une plaque d'obturation 9.

Le raccordement du tronçon 5 au tronçon tubulaire principal 2 est ici assuré au moyen d'une bride de fixation 10 (voir figure 1) solidaire du tronçon tubulaire principal 2, et entourant l'ouverture 7, d'une bride de fixation 11 solidaire du tronçon tubulaire de dérivation 5 et d'une collerette intermédiaire 12 enserrée entre ces brides 10 et 11 et coaxiale à celles-ci ; l'assujettissement de ces éléments 10 et 12 est ici assuré par des boulons. Des joints d'étanchéité en pratique annulaires 15 et 16 sont disposés aux interfaces entre la collerette 12 et les brides 10 et 11.

De préférence, mais non nécessairement, l'interface entre la collerette 12 et la bride 10 est tangent à la paroi externe du tronçon tubulaire principal 2.

Diamétralement en travers de cette collerette est disposé un arbre de manoeuvre 20, raccordé à un organe de commande (tel que moteur électrique rotatif par exemple) de tout type connu approprié, non représenté. Cet arbre est ici disposé transversalement aux tronçons tubulaires 2 et 5.

Cet arbre est avantageusement formé de deux tronçons 20A et 20B disposés dans le prolongement l'un de l'autre, et tourillonnant dans deux alésages 21A et 21B diamétralement opposés ménagés dans l'épaisseur radiale de la collerette et dans lesquels sont disposés des joints d'étanchéité 22 et 23.

A cet arbre de manoeuvre 20, est assujetti un papillon excentré (ou déporté) 30 muni d'oreilles 31 et 32 de liaison aux tronçons 20A et 20B.

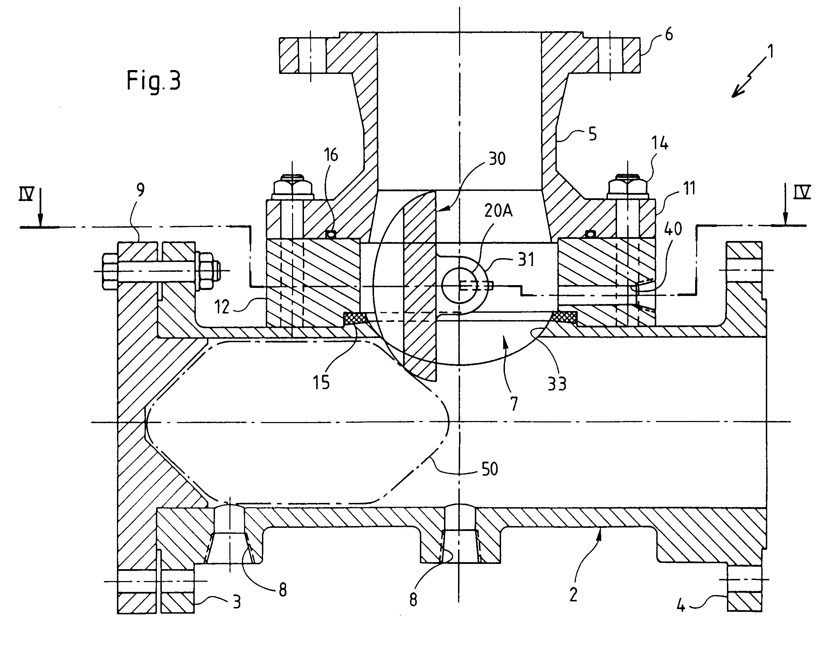

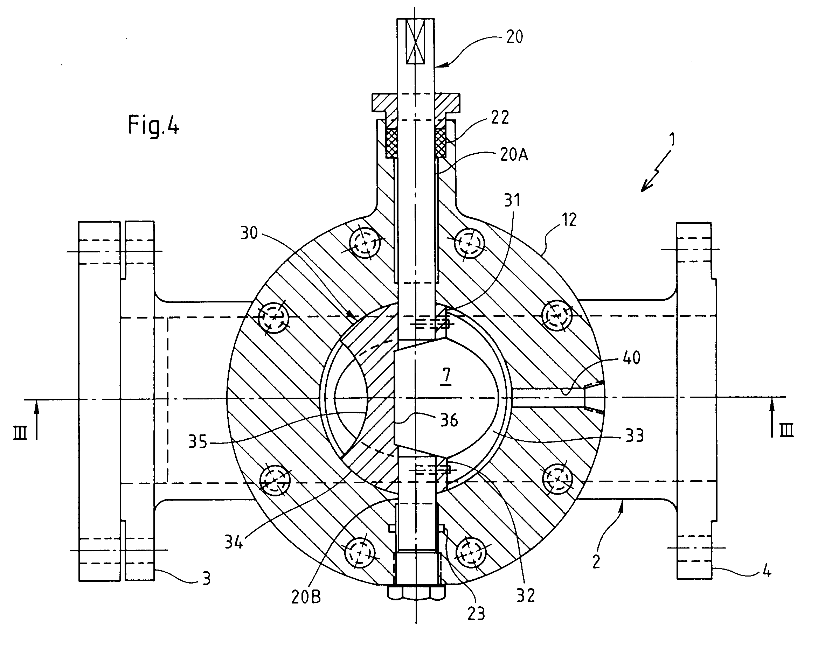

L'intérêt que le papillon 30 soit excentré par rapport à l'axe est que cela gêne le moins possible l'écoulement de fluide en configuration ouverte (voir les figures 3 et 4) et permet de réaliser l'étanchéité de la vanne en disposant le joint 15 le plus près possible du tronçon raclable 2.

L'ouverture 7 est déterminée par l'intersection de la paroi cylindrique interne du tronçon 2 avec une surface 33 en portion de sphère formant un siège pour ce papillon 30. Cette portion de sphère est centrée à l'intersection de l'axe X-X de l'arbre de manoeuvre 20 et de l'axe Y-Y du tronçon tubulaire 5, à une distance suffisamment faible de l'axe Z-Z du tronçon tubulaire principal 2 et avec un diamètre suffisamment grand pour que cette surface 33 formant siège, intercepte bien sûr la paroi interne du tronçon 2 mais surtout détermine pour l'ouverture 7 une section de passage suffisante, compte tenu du papillon, pour ne générer qu'une perte de charge acceptable. Il est à la portée de l'homme de métier de choisir, compte tenu d'un seuil de perte de charge qu'il s'est fixé au préalable, des valeurs appropriées de diamètre et de la distance précités.

De préférence, la section de passage de l'ouverture vaut entre 45 et 65 % de la section de passage du tronçon tubulaire 5.

La distance entre l'axe de l'arbre de manoeuvre 20 et l'axe Z-Z est de préférence comprise entre 75 et 85 % du diamètre interne du tronçon tubulaire principal 2.

Le diamètre de la surface 33 formant siège est choisi de préférence supérieur au diamètre interne du tronçon tubulaire principal 2.

En pratique, les conduites raclables les plus utilisées ont des diamètres compris entre 50 et 150 mm environ (les conduites raclables les plus fréquentes sont en fait désignées par des références DN 50, DN 80, DN 100 ou DN 150, où DN signifie Diamètre Nominal et où les chiffres sont les mesures approximatives en millimètres des diamètres internes de ces conduites, c'est-à-dire approximativement 2, 3, 4 et 6 pouces anglo-saxons). Le diamètre interne de la collerette intermédiaire 12 (et donc le diamètre de la surface 33 qui lui est en pratique peu inférieur) est alors choisi de 20 à 30 mm (c'est-à-dire environ un pouce) supérieur à celui du tronçon raclable 2 :
- diamètre de 80 mm (ou environ 3 pouces) pour une conduite DN 50 (2 pouces),
- diamètre de 100 mm (environ 4 pouces) pour une conduite DN 80 (3 pouces),
- diamètre de 125 mm (environ 5 pouces) pour une conduite DN 100 (4 pouces).

La surface 33 a de préférence un diamètre valant entre 110 et 150 % (de préférence entre 125 % et 135 %) du diamètre interne du tronçon 2.

En configuration fermée l'étanchéité entre le papillon 30 et la surface 33 formant siège est assurée par une bague d'étanchéité qui est ici la même que celle, 15, assurant l'étanchéité à l'interface entre la collerette 12 et la bride 10.

Le papillon 30 est conformé en sorte d'obturer complètement l'ouverture 7 en complétant parfaitement à cet endroit la paroi cylindrique du tronçon tubulaire principal 2.

A cet effet, ce papillon 30 a une tranche 34 en portion de sphère, de même centre que la surface 33 formant siège et d'un diamètre juste intéfieur à celui de cette surface 33 pour obtenir le jeu nécessaire au libre débattement en rotation de ce papillon autour de l'axe X-X de l'arbre de manoeuvre 20, tout en évitant une éventuelle rétention de produit entre ces surfaces 33 et 34.

La face extérieure 35 de ce papillon excentré, c'est-à-dire la face opposée à l'axe X-X est concave, constituée d'une portion de cylindre dont l'axe est à une distance de l'axe X-X égale à la distance entre les axes X-X et Z-Z, avec une même inclinaison par rapport à l'axe X-X que l'axe Z-Z, et dont le diamètre est égal au diamètre interne du tronçon tubulaire principal 2. De la sorte, en configuration fermée, cette surface 35 épouse parfaitement la section cylindrique courante du tronçon 2.

Par contre, la forme de la face intérieure 36 de ce papillon (c'est-à-dire la face en regard de l'axe X-X) importe peu. Elle est ici plane.

On appréciera que grâce à ce papillon 30, aucun espace non raclable ne subsiste dans le tronçon tubulaire 2 en configuration fermée. D'autre part, l'étanchéité entre ces tronçons 2 et 5 est très bien assurée en configuration fermée.

En configuration ouverte, le papillon déborde à l'intérieur du volume interne cylindrique du tronçon 2, de préférence sur environ un quart, voire un tiers, du diamètre de ce volume (cela est compatible avec les plages de dimensionnement précitées pour la surface 33 formant siège), ce qui peut être mis à profit pour assurer une retenue en butée d'un racleur tel que celui représenté en traits mixtes à la figure 3 sous la référence 5O.

Cette situation est très avantageuse car le produit circulant dans la vanne ouverte a tendance, dans le cas où cette vanne est une vanne d'alimentation, à aspirer le racleur restant normalement en butée amont dans cette vanne pendant les opérations de transfert de ce produit.

Cet avantage subsisterait, quoique moins marqué, si l'axe X-X de l'arbre de manoeuvre étant non plus perpendiculaire mais parallèle à l'axe Z-Z de ce tronçon 2.

Bien entendu cet avantage, et l'obtention d'une perte de charge aussi faible que possible, sont assurés de façon optimale lorsque le papillon est pivoté à l'opposé de la voie du tronçon 2 avec laquelle on veut principalement mettre le tronçon 5 en communication : le papillon peut alors servir de déflecteur favorisant l'écoulement au travers de la vanne du papillon par rapport à la configuration d'obturation (le débattement en rotation est sur les figures égal à 90° mais peut bien sûr être inférieur).

La bague d'étanchéité 15 est de préférence aussi proche que possible du volume interne du tronçon 2 de manière à minimiser les rétentions de produit, sans toutefois bien sûr pénétrer dans ce volume interne. C'est notamment pour cela que la bride 10 est avantageusement tangente à la paroi externe du tronçon lorsque cette même bague 15 assure l'étanchéité entre cette bride et la collerette 12.

Du côté du tronçon tubulaire de dérivation 5, il n'est pas essentiel que la surface 33 formant siège se prolonge dans la collerette par une autre surface sphérique : il suffit que la surface interne de cette collerette autorise un libre débattement du papillon. C'est pourquoi, par souci de simplicité, la surface interne de cette collerette est cylindrique (on a précisé ci-dessus une manière de la dimensionner), mais cette surface interne pourrait bien sûr avoir une autre forme (sphérique, tronconique ...).

Selon une disposition particulièrement avantageuse de l'invention dans ce tronçon 5 ou, ce qui est encore mieux, dans la collerette 12 ( c'est le cas représenté sur les figures) un orifice de purge 50, adapté à être mis en communication avec une source de fluide de nettoyage sous pression de tout type connu approprié non représentée, est prévu pour permettre une purge éventuelle de l'ensemble du tronçon 5 (jusqu'à l'ouverture 7) et de la conduite à laquelle il est raccordé. De préférence, cet orifice de purge débouche au ras de la surface interne du papillon 30 lorsque celui-ci est en configuration fermée.

Une vanne conforme à l'invention peut trouver son intérêt dans tous les circuits de transfert que l'on veut pouvoir purger entre deux cycles de transfert, notamment dans les cas suivants :
- produits ayant une viscosité élevée, très difficiles à purger par gravité ou soufflage, tels que graisses, peintures, crèmes alimentaires, ligueurs diverses ...
- produits qui ne s'écoulent qu'à l'état réchauffé et qui figent ou se cristallisent à froid, tels que vernis ou bitumes ...

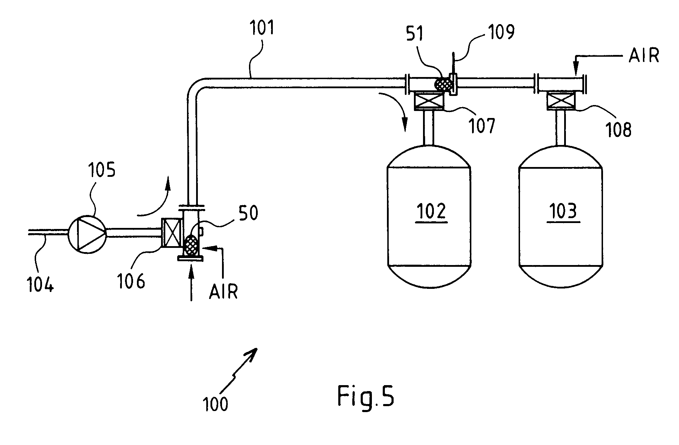

Une telle vanne trouve également son intérêt dans une installation telle que repérée 100 à la figure 5 utilisant une conduite commune raclable 101 pour remplir divers bacs 102 et 103 avec des produits distincts amenés par une même ligne d'arrivée 104 munie d'une pompe 105. Trois vannes 106, 107 et 108 de type précité peuvent alors être utilisées. Un dispositif spécifique d'arrêt 109 est alors avantageusement prévu à la sortie de la vanne intermédiaire 107 grâce à quoi l'un, 51, des racleurs prisonniers, maintenu en butée pour la pression du produit ou sous la poussée d'un gaz insufflé dans la vanne aval 108, peut défléchir le produit en cours d'écoulement vers le bac intermédiaire 102.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Vanne raclable à trois voies en forme de T (1) comportant un tronçon tubulaire principal raclable (2), un tronçon tubulaire secondaire (5) raccordé à angle droit à ce tronçon principal raclable (2) en regard d'une ouverture (7) ménagée radialement dans une portion médiane de ce tronçon tubulaire principal, et un élément mobile d'obturation (30) monté rotatif autour d'un arbre de manoeuvre (20) transversal à ce tronçon tubulaire secondaire (5) et monté près de l'ouverture du côté du tronçon tubulaire secondaire et admettant un débattement angulaire entre une configuration de fermeture dans laquelle cet élément mobile d'obturation (30) isole de façon étanche ce tronçon tubulaire secondaire vis à vis du tronçon tubulaire principal et une configuration d'ouverture dans laquelle ces tronçons tubulaires sont mis en communication, caractérisée en ce que ladite ouverture (7) est déterminée par l'intersection de la surface interne cylindrique du tronçon tubulaire principal (2) avec une surface formant siège (33) formée d'une portion de sphère centrée sur l'intersection de l'axe (X-X) de l'arbre de manoeuvre avec l'axe (Y-Y) du tronçon tubulaire secondaire (5) à une distance de l'axe (Z-Z) du tronçon tubulaire principal inférieure à la somme du rayon interne de ce tronçon tubulaire et du rayon de cette portion de sphère, et en ce que cet élément mobile d'obturation (30) est un papillon plein déporté par rapport à l'axe de l'arbre de manoeuvre, ayant une tranche (34) formée d'une portion de sphère concentrique à la surface formant siège et de diamètre égal, à un jeu près, à cette surface formant siège, et une face extérieure (35) tournée vers l'intérieur du tronçon tubulaire principal qui est une portion concave de cylindre de même diamètre que la surface interne cylindrique du tronçon tubulaire principal et d'axe situé vis à vis de l'axe (X-X) de l'arbre de manoeuvre à la même distance et selon la même inclinaison que l'axe (Z-Z) du tronçon tubulaire principal, grâce à quoi, en configuration de fermeture, ce papillon obture complètement l'ouverture en complétant localement la surface interne cylindrique du tronçon tubulaire principal.

2. Vanne selon la revendication 1, caractérisée en ce qu'un orifice de purge (40) adapté à être connecté à une source de fluide de nettoyage, débouche à l'écart de l'ouverture (7) du côté du tronçon tubulaire secondaire.

3. Vanne selon la revendication 2, caractérisé en ce que cet orifice de purge (40) débouche au ras de la face intérieure (36) du papillon.

4. Vanne selon l'une quelconque des revendications 1 à 3, caractérisée en ce que ce papillon a une face intérieure (36) qui est plane.

5. Vanne selon l'une quelconque des revendications 1 à 4, caractérisée en ce que la surface (33) formant siège et la tranche du papillon ont un diamètre supérieur au diamètre interne du tronçon tubulaire principal.

6. Vanne selon la revendication 5, caractérisée en ce que ce diamètre vaut entre 110 % et 150 % du diamètre interne du tronçon tubulaire principal.

7. Vanne selon la revendication 6, caractérisée en ce que ce diamètre vaut entre 125 % et 135 % du diamètre interne du tronçon tubulaire principal.

8. Vanne selon l'une quelconque des revendications 1 à 7, caractérisée en ce que l'ouverture (7) a une section valant entre 45 % et 65 % du diamètre interne du tronçon tubulaire principal (2).

9. Vanne selon l'une quelconque des revendications 1 à 8, caractérisée en ce que l'arbre de manoeuvre (20) est formé de deux tronçons (20A, 20B) coaxiaux et distants l'un de l'autre, tourillonnant dans des alésages diamétralement opposés et rendus solidaires l'un de l'autre par des oreilles (31, 32) ménagées sur la face intérieure (36) de ce papillon.

10. Vanne selon l'une quelconque des revendications 1 à 9, caractérisée en ce que l'axe (X-X) de l'arbre de manoeuvre est perpendiculaire aux axes (Y-Y, Z-Z) des tronçons tubulaires principal et secondaire.

11. Vanne selon l'une quelconque des revendications 1 à 10, caractérisée en ce que le tronçon tubulaire principal comporte une bride de fixation (10) entourant l'ouverture, sur laquelle est fixée une pièce (12) de liaison au tronçon tubulaire secondaire, une même bague d'étanchéité (15) assurant l'étanchéité entre le papillon (30) et la surface (33) formant siège et entre cette bride de fixation (10) et la pièce de liaison (12).

12. Vanne selon l'une quelconque des revendications 1 à 11, caractérisée en ce qu'une collerette (12) présentant un alésage cylindrique est interposée entre le tronçon tubulaire secondaire (5) et une bride (10) du tronçon principal entourant l'ouverture, l'arbre de manoeuvre (20) étant monté tourillonnant dans cette collerette.

13. Vanne selon la revendication 10, caractérisée en ce qu'un orifice de purge (40) pour la purge du tronçon tubulaire secondaire débouche radialement dans cette collerette.

14. Vanne selon l'une quelconque des revendications 1 à 13, caractérisée en ce que le papillon (30), en configuration d'ouverture, déborde à l'intérieur du tronçon tubulaire principal sur environ un quart à un tiers du diamètre interne de ce dernier.

15. Vanne selon l'une quelconque des revendications 1 à 14, caractérisée en ce que ladite distance entre l'axe (X-X) de l'arbre de manoeuvre et l'axe (Z-Z) du tronçon tubulaire principal (2) vaut entre 75 et 85 % du diamètre interne de ce tronçon tubulaire principal (2).

## Claims

1. T-shaped three-way pig-compatible valve (1) comprising a pig-compatible tubular main section (2), a tubular secondary section (5) connected at right angles to this pig-compatible main section (2) opposite a radial opening (7) in a median portion of this tubular main section, and a moving closing element (30) rotating around a control shaft (20) transverse to this tubular secondary section (5) and mounted close to the opening on the side of the tubular secondary section and allowing an angular course between a closure configuration in which this moving closing element (30) seals off this tubular secondary section from the tubular main section and an opening configuration in which these tubular sections are connected, characterised in that said opening (7) is determined by the intersection of the internal cylindrical surface of the tubular main section (2) with a surface forming a seat (33) formed from a portion of a sphere centred on the intersection of the (X-X) axis of the control shaft with the (Y-Y) axis of the tubular secondary section (5) at a distance from the (Z-Z) axis of the tubular main section less than the sum of the internal radius of this tubular main section and the radius of this portion of a sphere, and in that this moving closing element (30) is a solid butterfly-type disk offset with respect to the axis of the control shaft, having an edge (34) formed from a portion of a sphere concentric with the surface forming the seat and with a diameter, allowing for clearance, equal to this surface forming a seat, and an outer surface (35) turned towards the inside of the tubular main section which is a concave portion of a cylinder of the same diameter as the internal cylindrical surface of the tubular main section and with an axis situated with respect to the (X-X) axis of the control shaft at the same distance and at the same inclination as the (Z-Z) axis of the tubular main section, whereby, in the closure configuration, this disk completely seals off the opening by locally completing the internal cylindrical surface of the tubular main section.

2. Valve according to claim 1, characterised in that a vent (40), adapted to be connected to a cleaning fluid source, discharges away from the opening (7) on the tubular secondary section side.

3. Valve according to claim 2, characterised in that this vent (40) discharges level with the inner surface (36) of the disk.

4. Valve according to any of claims 1 to 3, characterised in that this disk has a flat inner surface (36).

5. Valve according to any of claims 1 to 4, characterised in that the surface (33) forming a seat and the section of the disk have a diameter greater than the internal diameter of the tubular main section.

6. Valve according to claim 5, characterised in that this diameter is between 110% and 150% of the internal diameter of the tubular main section.

7. Valve according to claim 6, characterised in that this diameter is between 125% and 135% of the internal diameter of the tubular main section.

8. Valve according to any of claims 1 to 7, characterised in that the opening (7) has a section of between 45% and 65% of the internal diameter of the tubular main section (2).

9. Valve according to any of claims 1 to 8, characterised in that the control shaft (20) is formed from two sections (20A, 20B) that are coaxial and separate, pivoting in diametrically opposite bores rendered integral by lugs (31, 32) on the inner surface (36) of this disk.

10. Valve according to any of claims 1 to 9, characterised in that the (X-X) axis of the control shaft is perpendicular to the (Y-Y, Z-Z) axes of the tubular main and secondary sections.

11. Valve according to any of claims 1 to 10, characterised in that the tubular main section comprises a mounting flange (10) surrounding the opening, to which is secured a linking part (12) to the tubular secondary section, a single sealing ring (15) providing the seal between the disk (30) and the surface (33) forming a seat and between this mounting flange (10) and the linking part (12).

12. Valve according to any of claims 1 to 11, characterised in that a flange (12) with a cylindrical bore is interposed between the tubular secondary section (5) and a mounting flange (10) of the main section surrounding the opening, the control shaft (20) pivoting in this flange (12).

13. Valve according to claim 10, characterised in that a vent (40) for draining the tubular secondary section discharges radially into this flange (12).

14. Valve according to any of claims 1 to 13, characterised in that the disk (30), in the open configuration, extends inside the tubular main section approximately a quarter to a third of the internal diameter of the latter.

15. Valve according to any of claims 1 to 14, characterised in that said distance between the (X-X) axis of the control shaft and the (Z-Z) axis of the tubular main section (2) is between 75 and 85% of the internal diameter of this tubular main section (2).

## Patentansprüche

1. Molchfähiges 3-Wege-Ventil in Form eines T (1), umfassend einen molchfähigen Hauptrohrabschnitt (2), einen Nebenrohrabschnitt (5), der im rechten Winkel an diesen molchfähigen Hauptrohrabschnitt (2) gegenüber einer Öffnung (7) angeschlossen ist, die radial in einem mittleren Teil dieses Hauptrohrabschnitts vorgesehen ist, und ein bewegliches Verschlußelement (30), das drehbar um eine Betätigungswelle (20) montiert ist, die zu diesem Nebenrohrabschnitt (5) quer angeordnet ist und nahe der Öffnung auf der Seite des Nebenrohrabschnitts montiert ist und einen Winkelausschlag zwischen einer Verschlußkonfiguration, in der dieses bewegliche Verschlußelement (30) diesen Nebenrohrabschnitt von dem Hauptrohrabschnitt auf dichte Weise isoliert, und einer Öffnungsstellung zuläßt, in der diese Rohrabschnitte in Verbindung gesetzt sind, dadurch gekennzeichnet, daß diese Öffnung (7) durch die Schnittlinie der zylindrischen Innenfläche des Hauptrohrabschnitts (2) mit einer einen Sitz bildenden Fläche (33) bestimmt ist, die von einem Kugelteil gebildet ist, der auf den Schnittpunkt der Achse (X-X) der Betätigungswelle mit der Achse (Y-Y) des Nebenrohrabschnitts (5) in einer Entfernung von der Achse (Z-Z) des Hauptrohrabschnitts zentriert ist, die kleiner als die Summe des Innenradius dieses Rohrabschnitts und des Radius dieses Kugelteils ist, und daß dieses bewegliche Verschlußelemnent (30) eine volle Drehklappe ist, die bezüglich der Achse der Betätigungswelle versetzt ist und eine Kante (34), die von einem Kugelabschnitt gebildet ist, der zu der einen Sitz bildenden Fläche konzentrisch ist und einen Durchmesser gleich, abgesehen von einem Spiel, dieser einen Sitz bildenden Fläche hat, und eine dem Inneren des Hauptrohrabschnitts zugewandte Außenfläche (35) hat, die ein konkaver Zylinderabschnitt mit demselben Durchmesser wie die zylindrische Innenfläche des Hauptrohrabschnitts und mit einer Achse ist, die bezüglich der Achse (X-X) der Betätigungswelle in derselben Entfernung und in derselben Neigung wie die Achse (Z-Z) des Hauptrohrabschnitts gelegen ist, wodurch diese Drehklappe in Verschlußkonfiguration die Öffnung vollständig verschließt, indem sie örtlich die zylindrische Innenfläche des Hauptrohrabschnitts vervollständigt.

2. Ventil nach Anspruch 1, dadurch gekennzeichnet, daß eine Entleerungsöffnung (40), die so ausgelegt ist, daß sie an eine Reinigungsfluidquelle angeschlossen werden kann, in einem Abstand von der Öffnung (7) auf der Seite des Nebenrohrabschnitts ausmündet.

3. Ventil nach Anspruch 2, dadurch gekennzeichnet, daß diese Entleerungsöffnung (40) in Höhe der Innenfläche (36) der Drehklappe ausmündet.

4. Ventil nach einem der Ansprüche 1 bis 3, dadurch gekennzeichnet, daß diese Drehklappe eine. Innenfläche (36) hat, die eben ist.

5. Ventil nach einem der Ansprüche 1 bis 4, dadurch gekennzeichnet, daß die einen Sitz bildende Fläche (33) und die Kante der Drehklappe einen Durchmesser haben, der größer als der Innendurchmesser des Hauptrohrabschnitts ist.

6. Ventil nach Anspruch 5, dadurch gekennzeichnet, daß dieser Durchmesser 110 % bis 150 % des Innendurchmessers des Hauptrohrabschnitts beträgt.

7. Ventil nach Anspruch 6, dadurch gekennzeichnet, daß dieser Durchmesser 125 % bis 135 % des Innendurchmessers des Hauptrohrabschnitts beträgt.

8. Ventil nach einem der Ansprüche 1 bis 7, dadurch gekennzeichnet, daß die Öffnung (7) einen Querschnitt hat, der 45 bis 65 % des Innendurchmessers des Hauptrohrabschnitts (2) beträgt.

9. Ventil nach einem der Ansprüche 1 bis 8, dadurch gekennzeichnet, daß die Betätigungswelle (20) von zwei koaxialen und voneinander entfernten Abschnitten (20A, 20B) geformt ist, die in diametral entgegengesetzten Lagern drehbar gelagert ist und durch Ösen (31, 32) miteinander fest verbunden sind, die auf der Innenfläche (36) dieser Drehklappe vorgesehen sind.

10. Ventil nach einem der Ansprüche 1 bis 9, dadurch gekennzeichnet, daß die Achse (X-X) der Betätigungswelle zu den Achsen (Y-Y, X-X) des Hauptrohrabschnitts und des Nebenrohrabschnitts senkrecht ist.

11. Ventil nach einem der Ansprüche 1 bis 10, dadurch gekennzeichnet, daß der Hauptrohrabschnitt einen Befestigungsflansch (10) besitzt, der die Öffnung umgibt und auf dem ein Teil (12) zur Verbindung mit dem Nebenrohrabschnitt befestigt ist, wobei ein gemeinsamer Dichtring (15) die Dichtheit zwischen der Drehklappe (30) und der einen Sitz bildenden Fläche (33) und zwischen diesem Befestigungsflansch (10) und dem Verbindungsteil (12) gewährleistet.

12. Ventil nach einem der Ansprüche 1 bis 11, dadurch gekennzeichnet, daß ein Ring (12) mit einer zylindrischen Bohrung zwischen den Nebenrohrabschnitt (5) und einen die Öffnung umgebenden Flansch (10) des Hauptrohrabschnitts eingesetzt ist, wobei die Betätigungswelle (20) in diesem Ring drehbar gelagert montiert ist.

13. Ventil nach Anspruch 10, dadurch gekennzeichnet, daß eine Entleerungsöffnung (40) für die Entleerung des Nebenrohrabschnitts in diesem Ring radial ausmündet.

14. Ventil nach einem der Ansprüche 1 bis 13, dadurch gekennzeichnet, daß die Drehklappe (30) in Öffnungskonfiguration im Inneren des Hauptrohrabschnitts auf etwa einem Viertel bis einem Drittel dessen Innendurchmessers hervorsteht.

15. Ventil nach einem der Ansprüche 1 bis 14, dadurch gekennzeichnet, daß diese Entfernung zwischen der Achse (X-X) der Betätigungswelle und der Achse (Z-Z) des Hauptrohrabschnitts (2) 75 bis 85 % des Innendurchmessers dieses Hauptrohrabschnitts (2) beträgt.
